# EUROPÄISCHE PATENTSCHRIFT

(11) **EP 2 492 072 B1**
(45) Veröffentlichungstag und Bekanntmachung des Hinweises auf die Patenterteilung: **29.03.2017**
(21) Anmeldenummer: 12155934.8
(22) Anmeldetag: 17.02.2012
(51) Int. Cl.: B27D 5/00, B23C 3/12

(54) **Bearbeitungsvorrichtung mit Tastrolle**
Processing device with feeler roller
Dispositif de traitement doté d'un rouleau palpeur

(30) Priorität: 22.02.2011 DE 102011004537
(43) Veröffentlichungstag der Anmeldung: 29.08.2012
(73) Patentinhaber: HOMAG GmbH, 72296 Schopfloch (DE)
(72) Erfinder: Kalmbach, Wilhelm, 72296 Schopfloch (DE)
(74) Vertreter: Hoffmann Eitle

(56) Entgegenhaltungen:
- EP-A1- 2 191 948
- EP-A1- 2 392 438
- EP-A2- 1 044 772
- DE-A1- 4 113 543

## Beschreibung

### Gebiet der Erfindung

Die Erfindung betrifft eine Bearbeitungsvorrichtung mit einer Tastrolle, gemäß dem Oberbegriff des Anspruchs 1.

Eine solche Vorrichtung ist aus EP1044772A2 bekannt.

### Stand der Technik

Üblicherweise hat eine Tastrolle die Aufgabe, Werkstückprofile z.B. beim Formfräsen zu kopieren, oder die Bearbeitungsqualität bei Werkstücktoleranzen zu optimieren. Beispielsweise kann dadurch erreicht werden, dass eine angeleimte Kante an der Schmalfläche eines Werkstücks bündig zur Werkstückseite oder zum Werkstückprofil gefräst werden kann. Die Tastrolle ist in der Regel zum Werkzeug je nach Einsatzfall in eine, zwei oder drei Richtungen verstellbar. Dies erfordert teilweise aufwändige Aufnahmen und Verstellsysteme für die Tastrolle. Dadurch ist die Dynamik und Steifigkeit der Tastrolle begrenzt und die Ausführungen kostenintensiv.

Um diese Nachteile auszugleichen, gibt es im Stand der Technik, beispielsweise in der EP 2 011 614 A1 Ausführungen, bei denen die Tastrolle zentral unter einer Antriebswelle für ein Werkzeug, vorliegend ein Fräswerkzeug, angeordnet. Die DE 199 15 672 C2 zeigt ebenfalls eine Tastrolle, die koaxial mit einem Fräswerkzeug angeordnet ist.

Bei einer Tastrolle, die jedoch an einer Antriebsspindel gelagert ist, entstehen andere Probleme, insbesondere dass die Rotation der Antriebsspindel auch die Tastrolle antreibt, selbst wenn diese beispielsweise über Kugellager auf der Welle gelagert ist und daher relativ zur Antriebsspindel drehbar gelagert ist.

Als weitere Schrift ist die nachveröffentlichte EP 2 392 438 A1 zu nennen wurde. Diese betrifft eine Bearbeitungsvorrichtung zum Bearbeiten von plattenförmigen Werkstücken mit einer Tastrolle, die um ihre Rotationsachse drehbar gelagert ist und die die Lage des Werkzeugs relativ zum Werkstück steuert. Die Vorrichtung dieser Schrift zeichnet sich dadurch aus, dass die Tastrolle mittels einer Steueranordnung derart gelagert ist, dass die Rotationsachse relativ zum zugeordneten Werkstück verstellbar ist.

### Darstellung der Erfindung

Die Aufgabe der vorliegenden Erfindung ist es daher, eine Tastrollenvorrichtung bereitzustellen, die eine unkontrollierte Bewegung der Tastrolle verringert und idealerweise begrenzt, dabei aber eine hohe Dynamik und eine hohe Steifigkeit ermöglicht.

Die Aufgabe wird gelöst durch eine Bearbeitungsvorrichtung nach Anspruch 1.

Eine erfindungsgemäße Vorrichtung umfasst eine Bearbeitungseinrichtung mit einem Bearbeitungswerkzeug, das an einer Antriebswelle drehfest angebracht ist, einen Motor mit einem Rotor und einer Statorwicklung, der die Antriebswelle antreibt und eine Tastrolle, die koaxial mit der Antriebswelle und auf der Werkzeugseite der Antriebswelle angeordnet ist und die sich relativ zur Antriebswelle drehen kann. Die Antriebswelle ist als eine Hohlwelle ausgebildet, in der eine Lagerwelle für die Tastrolle angeordnet ist, mit welcher die Tastrolle verbunden ist. Die Lagerwelle ist relativ zur Antriebswelle drehbar. Eine solche separate Lagerwelle, an der die Tastrolle gelagert ist, ermöglicht eine Verringerung der Rotation der Tastrolle, beispielsweise durch die zusätzliche Masse der Lagerwelle.

Um diesen Effekt zu vergrößern, kann die Lagerwelle als Vollwelle ausgeführt sein.

Die Lagerwelle kann zumindest teilweise im Gehäuse der Vorrichtung angeordnet sein, so dass einer Antriebsreibung in einer möglichen Lagerung in der Antriebswelle entgegengewirkt werden kann.

Ferner kann die Vorrichtung eine Bremsvorrichtung für die Lagerwelle aufweisen, mit der die Drehgeschwindigkeit der Lagerwelle gebremst werden kann. Eine solche Bremsvorrichtung ermöglicht das gezielte Beschränken oder sogar verhindern einer Drehung der Lagerwelle und dadurch auch der Tastrolle.

Eine bevorzugte Stelle um die Bremsvorrichtung anzubringen, ist die der Werkzeugseite gegenüberliegende Seite der Vorrichtung. Dadurch ist es möglich, die Bremsvorrichtung leicht zugänglich zu machen und beispielsweise Instandhaltungsarbeiten wie das Austauschen der Bremsbeläge schnell und einfach durchzuführen.

Bevorzugt ist der Antriebsmotor für die Antriebswelle um die Antriebswelle herum angeordnet, weiter bevorzugt in einer Axialrichtung in der Mitte der Antriebswelle.

Die Bremsvorrichtung kann ferner eine Steuerung umfassen, mit der die Drehgeschwindigkeit der Lagerwelle automatisch gesteuert werden kann. Insbesondere kann die Lagerwelle so auf unterschiedliche Durchlaufgeschwindigkeiten der zu bearbeitenden Werkstücke eingestellt werden.

Eine einfachere Möglichkeit die Lagerwelle auch ohne Bremsvorrichtung in ihrer Drehgeschwindigkeit zu beschränken ist, die Lagerwelle ganz im Gehäuse zu lagern.

Ferner kann auch die Tastrolle selbst zur Lagerwelle relativ drehbar sein, beispielsweise durch eine Lagerung über Kugellager zwischen Lagerwelle und Tastrolle.

### Kurze Beschreibung der Figuren

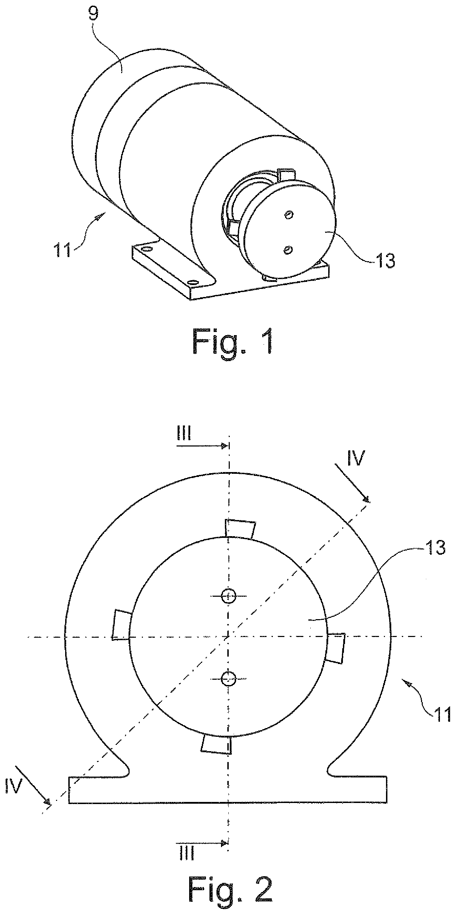

- Figur 1: zeigt eine isometrische Darstellung einer erfindungsgemäßen Bearbeitungsvorrichtung;
- Figur 2: zeigt eine Draufsicht auf die Tastrolle der erfindungsgemäßen Bearbeitungsvorrichtung;
- Figur 3: zeigt eine Schnittansicht der erfindungsgemäßen Vorrichtung entlang der Linie III-III in Figur 2;
- Figur 4: zeigt eine andere Schnittansicht der erfindungsgemäßen Vorrichtung entlang der Linie IV-IV aus Figur 2.

### Beschreibung der bevorzugten Ausführungsform

Im Folgenden wird die Seite der Bearbeitungsvorrichtung, auf der die Tastrolle angeordnet ist, als die untere Seite bezeichnet und die entsprechend gegenüber liegende Seite als die obere Seite.

Ferner wird im Folgenden lediglich eine Fräsvorrichtung beschrieben, die Erfindung lässt sich jedoch auf jede beliebige Werkzeugvorrichtung anwenden, bei der eine rotierende Antriebswelle verwendet wird, und bei der eine mit dem Werkzeug koaxiale Anordnung der Tastrolle vorteilhaft ist. Solche ein Werkzeug könnte beispielsweise eine (Kreis-)Säge sein.

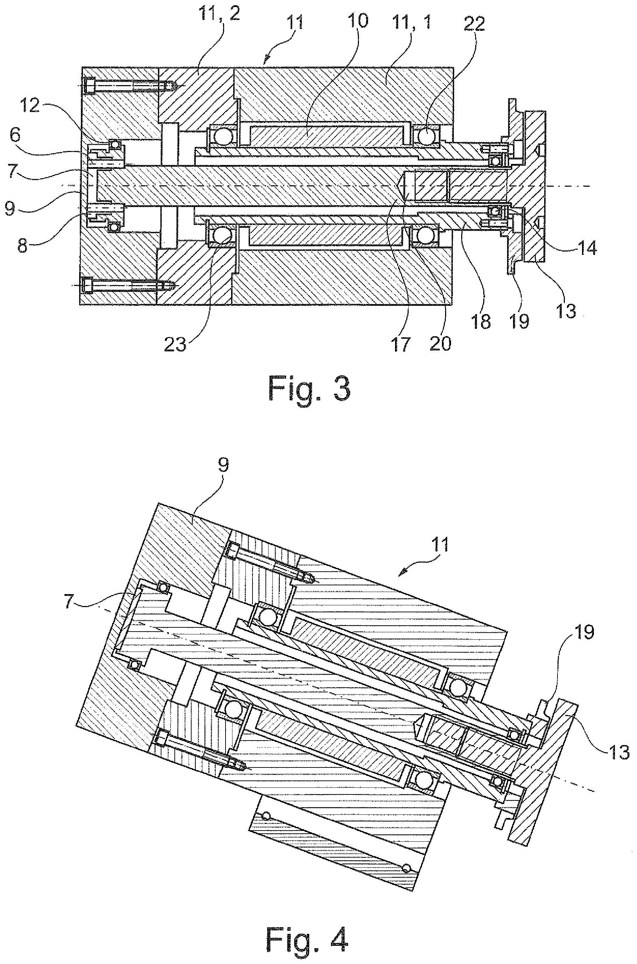

Die Bearbeitungsvorrichtung umfasst ein Gehäuse 11, 9, das vorliegend aus zwei Hauptgehäuseteilen 11.1 und 11.2 (Hauptgehäuse 11) sowie einem Deckel 9 besteht. Das Hauptgehäuse 11 ist in dieser Ausführungsform zweiteilig, da die Lagerung der Antriebsspindel 18, die vorliegend als eine Hohlspindel ausgebildet ist, über die Kugellager 22, 23 mit einem solchen zweiteiligen Gehäuse einfach bewerkstelligt werden kann (siehe Figuren 3 und 4). Es ist jedoch ebenfalls möglich, ein einteiliges Gehäuse zu verwenden und die Lagerung 22, 23 auf der Gehäuseseite beispielsweise mit einem Sprengring oder einer anderen konventionellen Art zu befestigen. Analog kann die Lagerung auf der Welle ebenfalls durch Vorsprünge und/oder durch Befestigungsringe angebracht werden. Die Lagerung ist dabei nicht auf Kugellager beschränkt, sondern kann jede geeignete Lagerung (bspw. Wälzlager) umfassen.

Die beiden Gehäuseteile 11.1 und 11.2 sind an einander bevorzugt mit Schrauben befestigt (siehe Figur 4) und der Deckel 9 ist separat an dem Gehäuse 11 befestigt (siehe Figur 3), bevorzugt ebenfalls mit Schrauben. Es ist jedoch auch möglich, den Deckel und das zweite Gehäuseteil 11.2 zusammen mit nur einem Befestigungsmittel zu befestigen, bspw. mit derselben Schraube, indem die Bohrung durch den Deckel und das zweite Gehäuseteil 11.2 hindurchgehen.

In dem Gehäuse 11 sind Wicklungen vorgesehen (nicht gezeigt), die zusammen mit dem Rotor 10 den Motor für das Antreiben der Antriebswelle bzw. Antriebsspindel 18 ausbildet. Die Antriebsspindel 18 ist mit dem Werkzeug 19 dreh- und axialfest verbunden, das in der gezeigten Ausführungsform ein Fräswerkzeug ist. Das Werkzeug ist vorliegend mit Schrauben an der Stirnseite der Antriebsspindel befestigt.

Die Antriebsspindel 18 ist mit den Lagern 22, 23 in dem Gehäuse 11 gelagert. In dieser Antriebsspindel 18 ist eine Lagerwelle 17 angeordnet, die eine Aufnahme für die Tastrolle 13 aufweist und die bevorzugt zumindest teilweise als Hohlwelle ausgebildet ist. In den Figuren 3 und 4 ist zu sehen, dass die Lagerwelle 17 über Kugellager 14 in der Antriebsspindel gelagert ist, während sie am anderen Ende über Kugellager 12 in dem Gehäuse 11, 9 (vorliegend im Deckel 9) gelagert ist. Es ist jedoch ebenfalls möglich die Lagerwelle 17 komplett im Gehäuse zu lagern (mit jeweils zwei Lagerungen 12, 14 im Gehäusebereich über der Antriebsspindel) oder die Lagerwelle komplett in der Antriebsspindel zu lagern. Eine Lagerung komplett im Gehäuse hätte den Vorteil, dass keine Rotation mehr von der Antriebsspindel an die Lagerwelle übertragen werden kann. Andererseits würde dadurch das Moment einer radialen Kraft, die auf die Tastrolle wirkt, im Hinblick auf die Lagerstellen 12, 14 vergrößert. Zusätzlich müsste man, wenn man will, dass sich die Tastrolle auch ohne Kontakt mit einem Werkstück dreht, einen extra Motor für die Lagerwelle 17, bzw. die Tastrolle vorsehen.

Die bevorzugte Lösung ist daher, dass die Tastrolle sowohl in der Antriebsspindel, als auch in dem Gehäuse 11, 9 gelagert ist. So kann die Lagerreibung der Lager 12 im Gehäuse, der antreibenden Reibkraft der Lager 14 in der Antriebsspindel 18 entgegenwirken.

In der vorliegenden Ausführungsform ist für die Lagerung der Tastrolle 13 in der Lagerwelle 17 eine Aufnahme 20 vorgesehen, die am Ende der Lagerwelle 17 ausgebildet ist. Es ist jedoch ebenso möglich, dass die Lagerwelle 17 durch das Werkzeug 19 hindurch nach unten hervorsteht, und die Tastrolle 13 dann auf der Lagerwelle 17 befestigt wird, beispielsweise direkt mit Schrauben, mit einer geeigneten Passung (Presspassung) oder auch über ein zusätzliches Lager, so dass die Tastrolle 13 sich relativ zur Lagerwelle 17 drehen könnte.

Da durch die Drehung der Antriebsspindel 18, die durch den Motor angetrieben wird, sich in der vorliegenden Ausführungsform, bei der ein Lager 14 in der Antriebsspindel und ein anderes Lager 12 im Gehäuse angeordnet ist, sich die Lagerwelle 17 auch anfängt zu drehen, ist weiter bevorzugt eine Bremsvorrichtung , bzw. eine Steuervorrichtung im Gehäuse vorgesehen, die an der Lagerwelle 17 angeordnet ist. Vorliegend ist die Bremsvorrichtung an der Stirnseite der Lagerwelle 17 angeordnet, sie kann jedoch auch umfänglich nur an einem Abschnitt oder auch um den kompletten Umfang angeordnet sein.

Die bevorzugte Bremsvorrichtung besteht aus einem Bremsbelag 7, der gegen einen Bremsabschnitt gedrückt wird. Dabei kann der Bremsbelag jeweils direkt oder indirekt an der Lagerwelle 17 oder am Gehäuse 11, 9 gelagert sein und der Bremsabschnitt dann am entsprechenden anderen Element (Lagerwelle oder Gehäuse). Vorzugsweise ist der Bremsbelag an der Stirnseite der Lagerwelle 17 angeordnet, die im oberen Teil des Gehäuses 11, 9 liegt. Dieser Bremsbelag ist über Stifte 6 an der Lagerwelle 17 außermittig befestigt, so dass der Bremsbelag 7 sich mit der Welle mitdreht. Vorliegend weist die Lagerwelle dazu einen Abschnitt mit einem etwas größeren Durchmesser auf, so dass die Stifte weiter radial außen angeordnet werden können. An diesem verbreiterten Abschnitt ist bevorzugt auch das Lager 12 angeordnet. Eine andere Befestigungsart könnte eine formschlüssige Verbindung von Bremsbelag 7 und Lagerwelle/Gehäuse sein, bspw. mit einer Nut im Bremsbelag und komplementären Vorsprüngen an der Welle, oder über die Kontur wie z.B. eine mehrkantige Ausführungsart der Bremsscheibe (Dreieck, Viereck, Fünfeck, Sechseck, usw.), die dann in eine entsprechende mehreckige Vertiefung an der Stirnseite der Lagerwelle 17 eingesetzt wird. Dabei ist die Dicke der Bremsscheibe größer, als die Tiefe der Vertiefung, so dass die Bremsscheibe über das Ende der Stirnseite der Lagerwelle 17 hervorsteht. Ebenfalls könnte die Bremsscheibe mit einer Passfeder an der Lagerwelle mit entsprechenden Nuten befestigt werden. Der Bremsbelag 7 kann auch einfach an Lagerwelle 7 oder Gehäuse 11, 9 verschraubt, geklebt oder vernietet sein, wobei dann auf dem jeweils anderen Element (Lagerwelle, Gehäuse) ein bewegbarer Bremsabschnitt vorgesehen sein sollte, damit die Bremse auch ihre volle Bremswirkung entfalten kann.

Der Bremsbelag kann selbstverständlich auch am Umfang der Lagerwelle mit Schrauben oder einer Presspassung befestigt sein.

Der Bremsbelag 7 wird mit Druckfedern 8 nach außen gedrückt, die entweder an oder um die Stifte herum angeordnet sind, oder die separat in der Lagerwelle 17 vorgesehen sind. Dadurch wird der Bremsbelag 7 gegen einen Bremsabschnitt des Motorgehäuses 11, 9 bzw. hier des Motordeckels 9 gedrückt, wodurch eine Bremswirkung entsteht. Die Vorspannung der Federelemente 8 wird bevorzugt so eingestellt, dass durch die entstehende Bremswirkung der Bremsvorrichtung keine oder nur eine geringe Drehung möglich ist, wenn die Tastrolle 13 nicht in Kontakt mit einem Werkstück steht, dass sich die Tastrolle aber in passend zur Durchlaufgeschwindigkeit des Werkstücks dreht, wenn sie in Kontakt mit dem Werkstück kommt. Ein anderer Parameter, der eine solche Voreinstellung beeinflusst, ist die Bremsreibung zwischen Bremsbelag und Bremsabschnitt (hier der Deckel 9, bzw. bevorzugt eine im Deckel 9 vorgesehene Bremsscheibe). Daher kann die Auswahl von geeigneten Oberflächen des Bremsabschnitts und des Bremsbelags, bspw. durch verschiedene Rauheiten, die Bremswirkung ebenfalls beeinflussen.

Eine solche Bremsvorrichtung kann jedoch auf vielerlei Arten ausgestaltet werden, beispielsweise kann der Bremsbelag 7 auch auf der Gehäuseseite befestigt sein und gegen die Stirnseite der Lagerwelle 17 gedrückt werden. Er kann auch radial außerhalb der Lagerwelle angeordnet sein und seitlich auf die Lagerwelle gedrückt werden (oder von der Lagerwelle radial nach außen gegen das Gehäuse 11, 9). Außerdem kann die auch unterhalb des Motors 10 vorgesehen sein.

In einer anderen Ausführungsform ist es ebenfalls denkbar, dass der Bremsbelag oder eine Bremsscheibe (elektro-) hydraulisch, (elektro-)pneumatisch oder (elektro-)magnetisch die Bremskraft der Bremsvorrichtung erzeugen. So ist eine präzise Steuerung der Bremskraft möglich und die Drehung der Tastrolle kann beliebig verändert werden, so dass bspw. die Lagerwelle 17 und die Tastrolle 13 schon vor dem Kontakt der Tastrolle 13 mit Werkstück die zur Durchlaufgeschwindigkeit des Werkstücks passende Rotation aufweisen.

## Patentansprüche

1. Vorrichtung zur Bearbeitung von plattenförmigen Werkstücken aus Holz, Holzwerkstoffen und/oder Kunststoffen, und insbesondere zur Bearbeitung der Schmalseiten der Werkstücke, umfassend:
eine Bearbeitungseinrichtung mit einem Bearbeitungswerkzeug (19), das an einer Antriebswelle (18) koaxial und drehfest angebracht ist;
einen Motor mit einem Rotor (10) und einem Stator, der die Antriebswelle (18) antreibt; und
eine Tastrolle (13), die koaxial mit und an der Werkzeugseite der Antriebswelle (18) angeordnet ist;
wobei,
die Antriebswelle (18) als Hohlwelle ausgebildet ist und **dadurch gekennzeichnet, dass** in der Antriebswelle (18) eine Lagerwelle (17) für die Tastrolle (13) angeordnet ist, die relativ zur Antriebswelle (18) drehbar ist, wobei die Tastrolle (13) mit der Lagerwelle (17) verbunden ist.

2. Vorrichtung nach Anspruch 1, die ferner eine Bremsvorrichtung für die Lagerwelle aufweist, so dass die Drehgeschwindigkeit der Lagerwelle gebremst werden kann.

3. Vorrichtung nach Anspruch 2, wobei die Bremsvorrichtung an der der Werkzeugseite gegenüberliegende Seite der Vorrichtung angeordnet ist.

4. Vorrichtung nach Anspruch 2 oder 3, bei der die Bremsvorrichtung einen Bremsbelag (7) und einen Bremsabschnitt aufweist.

5. Vorrichtung nach Anspruch 4, bei der der Bremsbelag (7) formschlüssig an der Lagerwelle (17) drehfest angebracht ist, bevorzugt mit Stiften (6), Schrauben oder über die Kontur.

6. Vorrichtung nach einem der vorhergehenden Ansprüche, bei der der Motor um die Antriebswelle (18) herum in einem Axial mittigen Teil angeordnet ist.

7. Vorrichtung nach einem der vorhergehenden Ansprüche, ferner umfassend eine Steuerung, die die Geschwindigkeit der Lagerwelle steuert.

8. Vorrichtung nach Anspruch 7 in Verbindung mit einem der Ansprüche 2 bis 4, bei der die Steuerung der Drehgeschwindigkeit über die Bremsvorrichtung durchführbar ist.

9. Vorrichtung nach Anspruch 7 oder 8, bei der die Steuerung der Drehgeschwindigkeit über einen separaten Motor für die Lagerwelle (17) durchführbar ist.

10. Vorrichtung nach einem der vorhergehenden Ansprüche, bei der die Lagerwelle (17) im Gehäuse (11, 9) und in der Antriebsspindel (18) gelagert ist.

11. Vorrichtung nach einem der vorhergehenden Ansprüche, bei der die Tastrolle (13) relativ zur Lagerwelle (17) drehbar ist, insbesondere indem die Tastrolle (13) durch Kugellager an der Lagerwelle (17) gelagert ist.

12. Vorrichtung nach einem der vorhergehenden Ansprüche, bei der das Werkzeug (19) eine Fräse oder eine Säge ist.

## Claims

1. Apparatus for processing board-like workpieces made of wood, derived timber products and/or plastics, and in particular for processing the narrow sides of the workpieces, comprising:
a processing device having a processing tool (19) which is mounted coaxially and non-rotatably on a drive shaft (18);
a motor having a rotor (10) and a stator which drives the drive shaft (18); and
a sensing roller (13) which is arranged coaxially with and on the tool side of the drive shaft (18);
wherein the drive shaft (18) is designed as a hollow shaft and **characterised in that** in the drive shaft (18) is arranged a bearing shaft (17) for the sensing roller (13), which is rotatable relative to the drive shaft (18), wherein the sensing roller (13) is connected to the bearing shaft (17).

2. Apparatus according to claim 1, which further has a braking device for the bearing shaft so that the speed of rotation of the bearing shaft can be retarded.

3. Apparatus according to claim 2, wherein the braking device is arranged on the side of the apparatus opposite the tool side.

4. Apparatus according to claim 2 or 3, in which the braking device has a brake lining (7) and a braking section.

5. Apparatus according to claim 4, in which the brake lining (7) is mounted non-rotatably and in form-locking relationship on the bearing shaft (17), preferably with pins (6) or screws or over the contour.

6. Apparatus according to any of the preceding claims, in which the motor is arranged round the drive shaft (18) in an axially central portion.

7. Apparatus according to any of the preceding claims, further comprising a control means which controls the speed of the bearing shaft.

8. Apparatus according to claim 7 in conjunction with any of claims 2 to 4, in which control of the speed of rotation can be performed by means of the braking device.

9. Apparatus according to claim 7 or 8, in which control of the speed of rotation can be performed by means of a separate motor for the bearing shaft (17).

10. Apparatus according to any of the preceding claims, in which the bearing shaft (17) is mounted in the housing (11, 9) and in the drive spindle (18).

11. Apparatus according to any of the preceding claims, in which the sensing roller (13) is rotatable relative to the bearing shaft (17), in particular by mounting the sensing roller (13) by ball bearings on the bearing shaft (17).

12. Apparatus according to any of the preceding claims, in which the tool (19) is a milling cutter or a saw.

## Revendications

1. Dispositif servant à usiner des pièces en forme de panneau composées de bois, de matériaux dérivés du bois et/ou de matières plastiques, et en particulier servant à usiner les tranches des pièces, comprenant :
un système d'usinage avec un outil d'usinage (19), qui est installé de manière coaxiale et de manière solidaire en rotation au niveau d'un arbre d'entraînement (18);
un moteur avec un rotor (10) et un stator, qui entraîne l'arbre d'entraînement (18) ; et
un rouleau palpeur (13), qui est disposé de manière coaxiale avec et au niveau du côté d'outil de l'arbre d'entraînement (18);
dans lequel,
l'arbre d'entraînement (18) est réalisé sous la forme d'un arbre creux, et **caractérisé en ce qu'**est disposé, dans l'arbre d'entraînement (18), un arbre de palier (17) pour le rouleau palpeur (13), qui peut tourner par rapport à l'arbre d'entraînement (18), dans lequel le rouleau palpeur (13) est relié à l'arbre de palier (17).

2. Dispositif selon la revendication 1, qui présente en outre un dispositif de freinage pour l'arbre de palier de sorte que la vitesse de rotation de l'arbre de palier puisse être ralentie.

3. Dispositif selon la revendication 2, dans lequel le dispositif de freinage est disposé au niveau du côté, opposé au côté d'outil, du dispositif.

4. Dispositif selon la revendication 2 ou 3, où le dispositif de freinage présente une garniture de frein (7) et un segment de frein.

5. Dispositif selon la revendication 4, où la garniture de frein (7) est installée de manière solidaire en rotation par complémentarité de forme au niveau de l'arbre de palier (17), de manière préférée avec des chevilles (6), des vis ou par l'intermédiaire du contour.

6. Dispositif selon l'une quelconque des revendications précédentes, où le moteur est disposé tout autour de l'arbre d'entraînement (18) dans une partie axialement centrale.

7. Dispositif selon l'une quelconque des revendications précédentes, comprenant en outre une commande, qui commande la vitesse de l'arbre de palier.

8. Dispositif selon la revendication 7 en lien avec l'une quelconque des revendications 2 à 4, où la commande de la vitesse de rotation peut être mise en oeuvre par l'intermédiaire du dispositif de freinage.

9. Dispositif selon la revendication 7 ou 8, où la commande de la vitesse de rotation peut être mise en oeuvre par l'intermédiaire d'un moteur séparé pour l'arbre de palier (17).

10. Dispositif selon l'une quelconque des revendications précédentes, où l'arbre de palier (17) est monté dans le boîtier (11, 9) et dans la broche d'entraînement (18).

11. Dispositif selon l'une quelconque des revendications précédentes, où le rouleau palpeur (13) peut tourner par rapport à l'arbre de palier (17) en particulier en ce que le rouleau palpeur (13) est monté par l'intermédiaire de paliers à roulement au niveau de l'arbre de palier (17).

12. Dispositif selon l'une quelconque des revendications précédentes, où l'outil (19) est une fraise ou une scie.
